# EUROPÄISCHE PATENTANMELDUNG

(11) **EP 3 432 234 A1**
(43) Veröffentlichungstag der Anmeldung: **23.01.2019**
(21) Anmeldenummer: 17182647.2
(22) Anmeldetag: 21.07.2017
(51) Int. Cl.: G06Q 10/04, G06Q 50/06

(54) **OPTIMIERUNG EINES QUERVERBUNDSYSTEMS MITTELS NEURONALER NETZWERKE**

(71) Anmelder: Hochschule Für Angewandte Wissenschaften - Fachhochschule Kempten, 87435 Kempten (DE)
(72) Erfinder: Faber, Till, 87435 Kempten (DE); Brauer, Jürgen, 87437 Kempten (DE); Finkenrath, Matthias, 87435 Kempten (DE); Mayer, Wolfgang, 80689 München (DE); Schott, Michael, 87435 Kempten (DE)
(74) Vertreter: Kretschmann, Dennis

(57) **Zusammenfassung**

Verfahren zur Optimierung eines energetischen Querverbundsystems mit einem rekurrenten neuronalen Netzwerk, wobei das Verfahren umfasst: Erfassen energetischer Daten des Querverbundsystems; Erfassen thermischer Daten eines thermischen Netzes in thermischer Verbindung mit dem Querverbundsystem; Prognostizieren eines Kennwertes eines Elements des Querverbundsystems durch das rekurrente neuronale Netzwerk auf Grundlage der erfassten energetischen Daten und thermischen Daten; und Erstellen einer Regelungsempfehlung für das Element des Querverbundsystems auf Grundlage des prognostizierten Kennwerts.

## Beschreibung

### Gebiet der Erfindung

Die vorliegende Erfindung bezieht sich auf die Prognose und Regelung von Zuständen eines Querverbundsystems unter Einsatz von neuronalen Netzwerken.

### Hintergrund

Die zunehmende Diversifikation von Energieträgern hat zu einer Vielzahl von Kraftwerkstypen und einer zunehmend komplexeren Organisation einer Energieerzeugung und Energieverteilung geführt. Dieser Trend wird durch eine prognostizierte Abkehr von fossilen Brennstoffen und eine Zunahme der Wiederverwertungsmöglichkeiten verschiedener Materialien für die Energieerzeugung und Energieverwertung weiter verstärkt.

Insbesondere bei der Bereitstellung einer Heizleistung, die sowohl im privaten als auch im industriellen Bereich einen wichtigen Bestandteil der benötigten Energielast betragen kann, zeichnet sich eine zunehmende Bedeutung von zentraler und dezentraler Erzeugung von Wärme durch die Anwendung von sowohl Nah- und Fernwärme als auch die Ausnutzung regenerativer und dezentraler Erzeugungsmöglichkeiten ab. Die vorliegende Erfindung kann dazu verwendet werden, die daraus entstehenden Herausforderungen für Regelungs- und Verteilungskonzepte zu adressieren.

### Allgemeine Beschreibung der Erfindung

Die Erfindung betrifft eine Optimierung eines Querverbundsystems mit einem Verfahren, einem neuronalen Netzwerk und einem Computerprogramm oder Computerprogrammprodukt nach den unabhängigen Ansprüchen. Die abhängigen Ansprüche betreffen bevorzugte Ausführungsformen der Erfindung. Die unterschiedlichen Ausführungsmerkmale dieser Ausführungsformen sind dabei kombinierbar, um die erfindungsgemäße Aufgabe zu lösen.

In einem ersten Aspekt bezieht sich die Erfindung auf ein Verfahren zur Optimierung eines energetischen Querverbundsystems mit einem rekurrenten neuronalen Netzwerk, wobei das Verfahren umfasst: Erfassen energetischer Daten des Querverbundsystems; Erfassen thermischer Daten eines thermischen Netzes in thermischer Verbindung mit dem Querverbundsystem; Prognostizieren eines Kennwertes eines Elements des Querverbundsystems durch das rekurrente neuronale Netzwerk auf Grundlage der erfassten energetischen Daten und thermischen Daten; und Erstellen einer Regelungsempfehlung für das Element des Querverbundsystems auf Grundlage des prognostizierten Kennwerts.

Ein energetisches Querverbundsystem kann aus einer Mehrzahl energetischer Erzeuger bestehen, wie zum Beispiel Kraftwerken und/oder Heizkraftwerken und/oder Heizwerken und/oder Solarphotozellen und/oder solarthermischen Anlagen. Die energetischen Erzeuger können einen Primär- oder Sekundärenergieträger (z.B. Erdöl, Kohle, Erdgas, Müll, Biomasse, Kraftstoffe, Wasserstoff, Synthesegase, Druckluft, elektrischer Strom, Solarenergie, Windenergie, Wellenenergie, Geothermie) in einen anderen erzeugten Energieträger wie zum Beispiel Wärme, elektrischen Strom, einen anderen Energieträger bzw. Kraftstofftypen oder eine Kombination mehrerer erzeugter Energieträger umwandeln.

Das Querverbundsystem kann die Erzeugung und Verteilung der erzeugten Energieträger kontrollieren und in Abhängigkeit eines Bedarfs eines gekoppelten Systems steuern. Die an das Querverbundsystem gekoppelten Systeme umfassen ein thermisches Netz, wie zum Beispiel ein Haus-, Quartiers-, Industrie-, Nah- und/oder Fernwärmenetz, und/oder ein Kälte-, Druckluft- und/oder Gasnetz.

Das Querverbundsystem steht in thermischer Verbindung mit dem thermischen Netz. Die thermische Verbindung kann durch einen Volumen- und/oder Massenstrom einer Flüssigkeit und/oder eines Gases hergestellt werden.

Das thermische Netz kann thermische Verbraucher, thermische Speicher und/oder dezentrale Erzeuger umfassen. Thermische Verbraucher können unterschiedliche Verbrauchertypen mit unterschiedlichen Verbrauchsdynamiken, wie industrielle Anlagen oder Wohnanlagen, umfassen. Dezentrale Erzeuger können Wärme für das thermische Netz bereitstellen und können Solaranlagen und/oder Geothermieanlagen und/oder Biomasseverbrennungsanlagen und/oder Abwärmeabflüsse umfassen.

Das gekoppelte System kann in einigen Ausführungsformen ein über Sektorkopplung verbundenes Erzeugungs-, Verteilungs- und/oder Umwandlungsnetz und/oder Teile eines solchen Erzeugungs-, Verteilungs- und/oder Umwandlungsnetzes umfassen. Zum Beispiel kann das gekoppelte System ein elektrisches Netz oder ein Power-to-X System, welches einen ersten Energieträger in einen zweiten Energieträger umwandeln kann, umfassen.

In einer bevorzugten Ausführungsform steuert das Querverbundsystem über Sektorkopplung die Erzeugung und/oder den Verbrauch von unterschiedlichen Energieträgern.

In einer weiteren bevorzugten Ausführungsform ist das Querverbundsystem mit einem elektrischen Netz gekoppelt und der prognostizierte Kennwert umfasst einen erzeugten elektrischen Strom, und insbesondere umfasst der prognostizierte Kennwert eine Differenz eines erzeugten Stroms und eines erwarteten Strombedarfs.

In einigen Ausführungsformen umfasst das Querverbundsystem außerdem Speichermittel für Energieträger. Vorzugsweise umfasst das Querverbundsystem einen Kraftstoff- oder Brennstoffspeicher, welcher einen primären Kraftstoff oder Brennstoff für die Erzeugung eines Energieträgers speichert und damit einen erwarteten Bedarf eines Energieträgers abdecken kann. Es kann aufgrund von Lieferzeiten, Preisschwankungen oder einer variierenden Kraftstofferzeugungsmenge des primären Kraftstoffes oder Brennstoffes von Vorteil sein, dass der Kraftstoff- oder Brennstoffspeicher eine Kapazität aufweist, die einen Bedarf des Energieträgers von mehreren Tagen oder Wochen abdecken kann.

In weiteren Ausführungsformen umfasst das Querverbundsystem einen oder mehrere zentrale oder dezentrale Wärmespeicher für die im Querverbundsystem erzeugte Wärme. Auf diese Weise können Unterschiede in der Wärme-Erzeugungskapazität des Querverbundsystems und des Wärme-Bedarfs eines gekoppelten Systems, wie dem thermischen Netz, aufgefangen werden.

Das rekurrente neuronale Netzwerk ist Teil der Optimierung des energetischen Querverbundsystems und umfasst künstliche Neuronen. Künstliche Neuronen können beispielsweise klassische Neuronen oder LSTM-Units umfassen. Klassische Neuronen empfangen mindestens einen Eingangswert, der gewichtet wird. Mehrere Eingangswerte können durch eine Übertragungsfunktion zu einem Eingabewert verknüpft werden. Eine Aktivierungsfunktion bestimmt aus dem Eingabewert einen Ausgabewert, der auch als Anregungspotential bezeichnet werden kann. LSTM-Units verwenden sog. Gates zur Berechnung eines Ausgabevektors.

Die künstlichen Neuronen können in Ebenen angeordnet werden und die Ebenen können miteinander gekoppelt sein. Eine erste Ebene kann eine Eingabeebene umfassen und Ausgabewerte für eine zweite (versteckte) Ebene bereitstellen. Die erste und die zweite Ebene können gekoppelt sein, indem der Ausgabewert eines Neurons der ersten Ebene als der Eingangswert mindestens eines künstlichen Neurons der zweiten Ebene verwendet wird. Die zweite Ebene kann mit einer dritten (versteckten) Ebene gekoppelt sein. Die Anzahl der (weiteren) Ebenen kann durch eine Rechenkapazität oder Implementierungsschwierigkeiten effektiv eingeschränkt sein. Jedoch ist generell jede Anzahl an (gekoppelten) Ebenen möglich. Eine Ausgabeebene ist eine letzte Ebene einer Vielzahl von gekoppelten Ebenen und stellt Ausgabewerte bereit. Die Ausgabewerte der Ausgabeebene umfassen somit eine Transformation der Eingangswerte der Eingabeebene.

Die Kopplung der Ebenen stellt eine Reihenfolge der Transformationsschritte und damit eine temporäre Ordnung der künstlichen Neuronen her. Technische Indikatoren, wie die thermischen und energetischen Daten, können somit von einer Eingabeebene an eine Ausgabeebene propagiert werden, um einen Zusammenhang mit einer weiteren technischen Größe, wie dem prognostizierten Kennwert, herzustellen.

In einem rekurrenten Netzwerk wird der Ausgabewert von mindestens einem künstlichen Neuron zusätzlich als Eingangswert eines künstlichen Neurons aus derselben oder einer vorhergehenden Ebene verwendet. Auf diese Weise kann ein Ausgabewert der Ausgabeebene von einer Auswahl historischer Eingangswerte der Eingabeebene abhängen und/oder von einem zuvor berechneten Zwischenwert, der in einem Neuron der Zwischenebenen zwischengespeichert wurde..

Zur Optimierung des Querverbundsystems werden als Teil der technischen Indikatoren die energetischen Daten des Querverbundsystems erfasst. Die energetischen Daten beziehen sich auf gemessene Zustandsgrößen des Querverbundsystems oder gemessene Zustandsgrößen von Elementen des Querverbundsystems. In einer bevorzugten Ausführungsform können die energetischen Daten Werte einer Last und/oder eines Energieträgerverbrauchs und/oder eines Volumenstroms und/oder eines Massenstroms und/oder eines Speicherstandes und/oder eines Behälter- bzw. Rohrleitungs- bzw. Reaktordrucks und/oder einer Behälter- bzw. Rohrleitungs- bzw. Reaktortemperatur umfassen.

Zusätzlich werden thermische Daten eines thermischen Netzes in thermischer Verbindung mit dem Querverbundsystem erfasst. Die thermischen Daten können sich auf gemessene Zustandsgrößen des thermischen Netzes oder gemessene Zustandsgrößen von Elementen des thermischen Netzes beziehen. In einer bevorzugten Ausführungsform können die thermischen Daten des thermischen Netzes Werte einer Rückflusstemperatur und/oder einer dezentralen Speichergröße und/oder einer dezentralen Erzeugungsgröße umfassen.

Auf Grundlage der erfassten energetischen Daten und thermischen Daten kann eine Optimierung des energetischen Querverbundsystems durchgeführt werden. Das rekurrente neuronale Netzwerk kann durch seinen Aufbau die historischen Daten für eine Optimierung berücksichtigen und daher einen Trend oder einen Verlauf der erfassten energetischen Daten und thermischen Daten für eine Prognose verwenden.

Die Optimierung umfasst das Prognostizieren eines Kennwertes eines Elements des Querverbundsystems durch das rekurrente neuronale Netzwerk auf Grundlage der erfassten energetischen Daten und thermischen Daten. Dabei können die erfassten energetischen Daten und thermischen Daten Eingangswerte einer Eingabeebene des rekurrenten neuronalen Netzwerks sein, und die Ausgabewerte der Ausgabeebene des rekurrenten neuronalen Netzwerks können den Kennwert des Elements des Querverbundsystems umfassen.

In bevorzugten Ausführungsformen umfasst das Prognostizieren des Kennwerts durch das rekurrente neuronale Netzwerk: Erhalten von Eingabedaten für das neuronale Netzwerk aus den thermischen Daten des thermischen Netzes; und Erhalten von Eingabedaten für das neuronale Netzwerk aus den energetischen Daten des Querverbundsystems.

Der Kennwert des Elements des Querverbundsystems bezieht sich auf eine Steuergröße des Elements oder eine Prognose eines Wertes eines technischen Indikators des Elements des Querverbundsystems, wie den energetischen Daten und/oder den thermischen Daten. Zum Beispiel kann der prognostizierte Kennwert eine Erzeugungsgröße eines thermischen und/oder energetischen Erzeugers und/oder eine Verbrauchsgröße eines Energieträgers und/oder ein Erzeugungsdefizit und/oder einen Erzeugungsüberschuss eines Energieträgers und/oder einen Speicherzustand eines thermischen Speichers und/oder energetischen Speichers und/oder eines Brennstoffspeichers oder Kraftstoffspeichers und/oder eine wartungsbedingte Ausfallgröße umfassen. Eine solcher Kennwert kann sich in einer Temperatur und/oder einer Leistung und/oder einer Effizienz und/oder einem Füllstand und/oder einem Volumen und/oder einem Gewicht und/oder einem Volumenstrom und/oder einem Massestrom und/oder einem Druck, einem Verschleiß- und/oder Verschmutzungszustand, einer Leckgröße und/oder einem Kraftstofftyp und/oder einem Zeitpunkt, usw. und/oder dessen Verlauf und/oder Gradient ausdrücken.

Der prognostizierte Kennwert kann außerdem eine externe Größe, wie eine Erzeugungsgröße und/oder eine Verbrauchsgröße und/oder eine Kapazitätsgröße eines gekoppelten Systems und/oder eine Wettergröße mit Bezug zu einem regenerativen Erzeugungskonzept, wie eine Windgeschwindigkeit und/oder eine Solarenergiedichte, insbesondere eine geographische Abhängigkeit einer Wettergröße, und/oder eine dezentrale Erzeugungsgröße umfassen.

Die Berücksichtigung des historischen Verlaufs der technischen Indikatoren durch das rekurrente neuronale Netzwerk kann es erlauben, die Prognosequalität von heuristischen Regeln, Anwenderwissen oder statistischen Methoden zu übertreffen. Zum Beispiel kann das rekurrente neuronale Netzwerk hierbei die Berücksichtigung zuvor unbekannter technischer Zusammenhänge erlauben. Die unbekannten technischen Zusammenhänge können durch eine zunehmende Diversifikation der Energieträger und/oder eine unerwartete Interaktion unterschiedlicher technischer Indikatoren und/oder einer Dezentralisierung von Erzeugungskonzepten entstehen.

In einer bevorzugten Ausführungsform umfasst der prognostizierte Kennwert eine erwartete Last und/oder einen Fehlerzustand und/oder ein Wartungserfordernis und/oder Wartungskosten und/oder einen Energieträgerbedarf des Elements des Querverbundsystems.

Die Auswahl der erfassten energetischen Daten und thermischen Daten und des prognostizierten Kennwerts kann es erlauben, die Optimierung des Querverbundsystems bezüglich verschiedener Gesichtspunkte zu steuern. Eine unspezifische Auswahl von Eingangsdaten und prognostizierten Kennwerten kann die Qualität und Anwendbarkeit der prognostizierten Kennwerte negativ beeinflussen.

Ein neuronales Netzwerk kann die Prognose der Kennwerte erlernen, indem ein Trainieren des neuronalen Netzwerks mit Trainingsdaten aus historischen und/oder simulierten energetischen Daten, historischen und/oder simulierten thermischen Daten und entsprechenden historischen und/oder simulierten erwünschten prognostizierten Kennwerten durchgeführt wird. Dabei kann eine Abbildung der energetischen Daten und thermischen Daten auf erwünschte prognostizierte Kennwerte geprüft werden. Mithilfe einer Optimierungsfunktion können die Gewichtung der Eingangswerte und/oder die Übertragungsfunktion und/oder die Aktivierungsfunktion jedes künstlichen Neurons des rekurrenten Netzwerks optimiert werden, sodass die Trainingsdaten durch das rekurrente neuronale Netzwerk abgebildet werden. Nach dem Trainieren des neuronalen Netzwerks kann die Prognose der ausgewählten Kennwerte auf der Grundlage von aktuellen energetischen Daten und thermischen Daten durchgeführt werden.

Die Effizienz des Trainings und damit die Qualität der Prognose kann mit der Komplexität und/oder der Anzahl an Eingangs- und Ausgangswerten des neuronalen Netzwerkes korrelieren. Es kann daher vorzugswürdig sein, den Aufbau des rekurrenten Netzwerks auf einen jeweiligen optimierten Gesichtspunkt anzupassen. Eine beispielhafte Möglichkeit der Anpassung kann eine Verschaltung der künstlichen Neuronen der Ebenen des rekurrenten neuronalen Netzwerks umfassen. Eine weitere beispielhafte Möglichkeit der Anpassung kann das Verwenden von duplizierten Teilen des neuronalen Netzwerks für Eingangswerte identischer oder ähnlicher Elemente des Querverbundsystems und/oder des thermischen Netzes umfassen. Ähnliche Elemente des Querverbundsystems können Sensoren identischer technischer Indikatoren oder Elemente gleichen Typs, wie zum Beispiel eine Auswahl von Temperatursensoren und/oder Heizkraftwerken, sein. Durch ein Anpassen des neuronalen Netzwerks auf einen optimierten Gesichtspunkt kann eine Optimierung des Querverbundsystems verbessert werden.

Der optimierte Gesichtspunkt bezieht sich auf eine erwartete Regelungsempfehlung für das Element des Querverbundsystems. Die Regelungsempfehlung kann in einer Steuereinheit verwendet werden, um den Gesichtspunkt des Querverbundsystems zu optimieren.

Die Regelungsempfehlung kann in einer bevorzugten Ausführungsform eine Lastverteilung der Elemente des Querverbundsystems umfassen und insbesondere eine Energieträgerverteilung oder Brennstoffverteilung zwischen Elementen des Querverbundsystems und/oder eine Wartungsplanung umfassen.

In bevorzugten Ausführungsformen umfasst das Prognostizieren des Kennwertes das Erfassen interner Daten. Interne Daten können Teil eines internen Erfassungssystems sein und können Sensordaten des Querverbundsystems umfassen.

In einigen bevorzugten Ausführungsformen umfasst das Prognostizieren des Kennwertes das Erfassen externer Daten, die nicht Teil eines Erfassungssystems des Querverbundsystems sein können, wie zum Beispiel Prognosedaten und/oder externe Sensordaten und/oder Marktdaten und/oder Kapazitätsdaten externer Speicher und/oder externer Erzeugungsanlagen.

In einer bevorzugten Ausführungsform umfasst das Prognostizieren des Kennwertes das Erfassen von Wetterdaten, die sowohl externe Daten als auch interne Daten sein können. Insbesondere kann das Prognostizieren des Kennwerts durch das rekurrente neuronale Netzwerk umfassen: Erhalten von Eingabedaten, insbesondere eines Eingabevektors, aus historischen Wetterdaten; und Erhalten von Eingabedaten, insbesondere eines Eingabevektors, von prognostizierten Wetterdaten; wobei die historischen Wetterdaten und die prognostizierten Wetterdaten eine Luftfeuchtigkeit und/oder eine Windgeschwindigkeit und/oder eine Solarstrahlungsdichte und/oder eine Temperatur umfassen, und insbesondere eine geographische Abhängigkeit der Wetterdaten in dem geographischen Bereich des thermischen Netzes umfassen können.

In einer weiteren bevorzugten Ausführungsform umfasst das Verfahren ein Trainieren des rekurrenten neuronalen Netzwerks mit historischen prognostizierten Wetterdaten.

Die Optimierung des Querverbundsystems kann durch die Beachtung von Wetterdaten verbessert werden. Zum Beispiel kann eine erwartete Last des thermischen Netzes von einer Umgebungstemperatur in einem Sektor des thermischen Netzes abhängen. Die Umgebungstemperatur in verschiedenen Sektoren des thermischen Netzes kann unterschiedlich sein. Somit kann eine geographische Abhängigkeit der Wetterdaten die Vorhersage einer Last verbessern.

In einigen Ausführungsformen ist es vorzugswürdig, das Datum des Prognosetages, und insbesondere die kausale Bedeutung des Datums, wie den Tagestyp (Montag, Dienstag, Wochenende, Feiertag, Ferientag), als externe Daten für das neuronale Netzwerk bereitzustellen, um die Prognosequalität zu verbessern. Zusätzlich kann es vorzugswürdig sein, das Datum, und insbesondere die kausale Bedeutung des Datums, für das eine Prognose erstellt wird, für das neuronale Netzwerk bereitzustellen.

Das Zusammenspiel verschiedener Phänomene, welche durch die erfassten Daten abgebildet werden können, kann Effekte hervorrufen, die außerhalb eines Bereiches heuristischer Regeln liegen und unabhängige und/oder kombinierte Effekte bedingen.

Zum Beispiel kann in Ausführungsformen, in denen zentrale und/oder dezentrale Erzeugung durch Solarkollektoren umfasst ist, die Umgebungstemperatur oder ein Kühlungseffekt einer Luftzirkulation erfassbar durch eine gemessene Windgeschwindigkeit die Effizienz eines Solarkollektors beeinflussen. Eine solche Interaktion kann durch das Trainieren des rekurrenten neuronalen Netzwerks ohne Kenntnis über eine geographische Position oder eine Größe der Solaranlage erfasst werden.

In einigen Ausführungsformen kann eine geographische Position oder Produktionskapazität eines dezentralen Erzeugers in einem Querverbundsystem unbekannt sein. Zusätzlich können die Verbrauchsdynamiken und geographischen Positionen industrieller Anlagen oder Wohnanlagen für ein steuerndes System eines Querverbundsystems unbekannt sein. Gleichzeitig kann die Effizienz einer Erzeugung und Weitergabe eines Energieträgers von der relativen geographischen Lage der energetischen Erzeuger und der thermischen Verbraucher abhängen. Das rekurrente neuronale Netzwerk kann diese Abhängigkeiten durch die Auswahl der historischen Verläufe der energetischen und thermischen Daten erfassen, ohne auf zusätzliche Information über die geographische Verteilung von Erzeugern und Verbrauchern mit unterschiedlichen Verbrauchsdynamiken angewiesen zu sein. Somit kann eine Regelungsempfehlung für das Element des Querverbundsystems erstellt werden, ohne dass Details des thermischen Netzes bekannt sein müssen.

In weiteren Ausführungsformen kann das Querverbundsystem mit einem Power-to-X-Sektor gekoppelt sein. In einer bevorzugten Ausführungsform eines solchen Falls kann der prognostizierte Kennwert eine Produktionskapazität eines produzierten Energieträgers umfassen. Das neuronale Netzwerk kann in diesem Fall eine Produktionskapazität des Power-to-X Sektors in Abhängigkeit von externen und/oder internen Daten nutzen.

Der Power-to-X Sektor führt eine Umwandlung zwischen Energieträgern und/oder Stoffen durch. Power-to-X kann Power-to-Ammonia und/oder Power-to-Chemicals und/oder Power-to-Fuel und/oder Power-to-Gas und/oder Power-to-Heat und/oder Power-to-Liquid und/oder Power-to-Mobility und/oder Power-to-Power und/oder Power-to-Syngas und/oder Power-to-Value (z.B. Methan) umfassen und kann einen Überschuss und/oder ein Defizit einer Erzeugungsgröße wie einer Leistung einer Wärmeproduktion und/oder einer Stromproduktion aufnehmen, um einen Energieträger und/oder eine produzierte und/oder chemisch modifizierte Stoffmenge (z.B. Chemikalien, Kraftstoffe, Flüssigkeiten, Gase usw.) zu erhalten.

In einer weiteren bevorzugten Ausführungsform kann das Verfahren ein Erhalten von Eingabedaten, insbesondere Eingabevektoren, aus Produktionskapazitäten und/oder Speicherkapazitäten einer Mehrzahl von Energieträgern und Kraftstofftypen umfassen, wobei die Regelungsempfehlung eine Menge und/oder eine Produktionskapazität und/oder einen Typ eines produzierten Energieträgers und/oder Stoffes umfasst.

In einer besonders bevorzugten Ausführungsform umfasst das rekurrente neuronale Netzwerk zumindest ein Teilnetzwerk vom Typ Long-Short-Term-Memory (LSTM). Ein LSTM-Netzwerk kann sich durch die Aufnahme eines Forget- und/oder Input-Gates (Aufnahme-Gates) als Teil einer rekurrenten Schleife auszeichnen. In der rekurrenten Schleife wird ein Ausgabewert eines nachfolgenden künstlichen Neurons als Eingangswert eines vorgeschalteten künstlichen Neurons verwendet, so dass der Ausgabewert des nachfolgenden künstlichen Neurons von einer Historie von Eingangswerten des vorgeschalteten künstlichen Neurons abhängen kann. Das Forget- und/oder Input-Gate ist ein künstliches Neuron oder eine Vielzahl künstlicher Neuronen, deren Ausgabewert mit dem Ausgabewert eines weiteren künstlichen Neurons oder einer weiteren Vielzahl künstlicher Neuronen multipliziert werden kann. Eine Multiplikation von Ausgabewerten kann ein selektives Vergessen und/oder Beachten zeitlich vorhergehender Zustände und damit eine effektive Priorisierung zeitlich zurückliegender Werte erlauben.

Die Dynamik eines Querverbundsystems kann von kurzfristigen und langfristigen Trends und/oder Verläufen abhängen. Die Verwendung eines LSTM-Netzwerks kann daher die Prognose von langfristigen Zuständen, wie zum Beispiel eines Wartungsbedarfs erlauben, und/oder das Erstellen einer langfristigen Prognose, wie zum Beispiel einer benötigten Energieträgermenge, durchführbar machen.

Zusätzlich kann ein LSTM-Netzwerk über die Beachtung langfristiger Verläufe und/oder Trends eine dem Querverbundsystem unbekannte Veränderung einer dezentralen Erzeugungsdynamik und/oder einer Verbrauchsdynamik für das Prognostizieren des Kennwerts berücksichtigen. Beispielsweise kann die Verwendung eines LSTM-Netzwerkes erlauben, eine Steuergröße des Querverbundsystems auf eine veränderte Anzahl an dezentralen Erzeugern, wie Windräder und/oder Solarthermieanlagen, und/oder eine veränderte Anzahl thermischer Verbraucher, wie zusätzliche industrielle Anlagen und/oder Wohnanlagen, anzupassen.

In einer weiteren bevorzugten Ausführungsform beruht das rekurrente neuronale Netzwerk auf einer Ensemble-Architektur, wie einem Netzwerkverbund, wobei die Ensemble-Architektur mindestens ein vorgeschaltetes Netzwerk aus der Gruppe aus einem rekurrenten Netzwerk vom Typ Long-Short-Term-Memory, einem rekurrenten Netzwerk vom Typ Sequence-to-Sequence, und/oder einem Entscheidungswald aus mindestens einem Entscheidungsbaum und einem BoostingVerfahren bzw. Boosting-Netzwerk umfasst; und wobei die Ensemble-Architektur ein Gewichtungstool umfasst, insbesondere ein gewichtendes neuronales Netzwerk; wobei das Prognostizieren des Kennwerts durch das rekurrente neuronale Netzwerk umfasst: Erhalten einer Prognosegröße eines vorgeschalteten Netzwerks durch das Gewichtungstool; und Prognostizieren des Kennwerts mittels des Gewichtungstools.

Eine Ensemble-Architektur kann dabei aus mehreren vorgeschalteten Netzwerken bestehen und unterschiedliche optimierte Gesichtspunkte in Abhängigkeit der Prognosequalität unterschiedlicher vorgeschalteter Netzwerke und unterschiedlicher Typen vorgeschalteter Netzwerke bezüglich des optimierten Gesichtspunkts bewerten.

Ein rekurrentes Netzwerk vom Typ Sequence-to-Sequence kann das Prognostizieren von zyklischen Phänomenen verbessern. Dabei wird eine (zeitlich begrenzte) Sequenz von Eingabedaten von einer erste Ebene eines neuronalen Netzwerkes codiert, und die codierten Eingabedaten werden von einer zweiten Ebene des neuronalen Netzwerkes dechiffriert, um einen aktuellen Zustand (Verlauf) des Systems auf einen zukünftigen Zustand (Verlauf) des Systems abzubilden. Die Analyse einer zeitlich begrenzten Sequenz kann dabei die Prognose eines Kennwerts erlauben, ohne auf unter Umständen fehlerbehaftete externe Daten, wie ungenaue Wetterprognosen, angewiesen zu sein.

In einer bevorzugten Ausführungsform umfasst die Ensemblearchitektur das neuronale Netzwerk vom Typ Sequence-to-Sequence, wobei das neuronale Netzwerk vom Typ Sequence-to-Sequence so eingerichtet ist, dass eine Sequenzlänge ein Tag, zwei Tage oder eine Woche ist. Das Anpassen der Sequenzlänge kann dabei die Gewichtung unterschiedlicher Verbrauchsdynamiken und/oder intrinsischer Last-Dynamiken bezüglich eines optimierten Gesichtspunktes unterstützen.

Ein Entscheidungswald aus mindestens einem Entscheidungsbaum und einem Boosting-Verfahren bzw. Boosting-Netzwerk erlaubt es, heuristische Regeln, die für verschiedene Elemente des Querverbundsystems in Form eines Entscheidungsbaums aufgestellt wurden, zu kombinieren. Der Entscheidungsbaum klassifiziert Eingangswerte anhand teilweise vorbestimmter Regeln in getrennte Bereiche. Die vorbestimmten Regeln können durch ein statistisches Verfahren oder ein neuronales Netzwerk optimiert werden. Ein Entscheidungsbaum kann heuristische Regeln für verschiedene Elemente des Querverbundsystems oder gekoppelter Systeme implementieren. Zum Beispiel kann eine heuristische Regel eines Entscheidungsbaums eine Abhängigkeit eines Wartungsbedarfs eines Elements des Querverbundsystems von einem Schwellwert eines Kesseldrucks umfassen.

Das Boosting-Verfahren, welches Prognosen der Entscheidungsbäume als Eingangswerte empfängt und eine Prognosegröße auf Grundlage der Eingangswerte erstellt, erlaubt es, eine Inhomogenität der Qualität und Quantität der Entscheidungsbäume bezüglich unterschiedlicher Elemente des Querverbundsystems und der gekoppelten Systeme zu bewerten. Weiterhin kann das Boosting-Verfahren die gleichzeitige Verwendung verschiedener Entscheidungsbäume für dasselbe Element des Querverbundsystems erlauben. Die Verwendung eines Entscheidungswaldes kann den weiteren Vorteil haben, dass die Ausgabewerte oder Prognosen der Entscheidungsbäume eine Entscheidungsfindung oder Fehleranalyse für einen menschlichen Entscheider vereinfachen können.

In einem weiteren Aspekt bezieht sich die Erfindung auf ein künstliches rekurrentes neuronales Netzwerk zur Optimierung eines Querverbundsystems, wobei das neuronale Netzwerk umfasst: eine Eingabeebene, welche Eingabedaten aus energetischen Daten eines Querverbundsystems und aus thermischen Daten eines thermischen Netzes erhält; mindestens eine versteckte Ebene, die mit der Eingabeebene gekoppelt ist; eine Ausgabeebene, die mit der mindestens einen versteckten Ebene gekoppelt ist und so konfiguriert ist, dass ein Anregungspotential der Ausgabeebene auf eine Prognose eines Kennwertes eines Elements des Querverbundsystems abgebildet werden kann.

In einer bevorzugten Ausführungsform umfasst das rekurrente neuronale Netzwerk ein rekurrentes Netzwerk vom Typ Long-Short-Term-Memory, und/oder ein rekurrentes Netzwerk vom Typ Sequence-to-Sequence, und/oder eine Kombination eines Entscheidungswaldes aus mindestens einem Entscheidungsbaum mit einem Boosting-Verfahren bzw. Boosting-Netzwerk.

In einer weiteren bevorzugten Ausführungsform bezieht sich die Erfindung auf einen neuronalen Netzwerkverbund, welcher umfasst: mindestens zwei vorgeschaltete neuronale Netzwerke mit einigen oder allen Merkmalen der zuvor beschriebenen neuronalen Netzwerke; und ein Gewichtungstool, welches so eingerichtet ist, dass aus den Anregungspotentialen der Ausgabeebene der mindestens zwei vorgeschalteten neuronalen Netzwerke eine Prognose eines Kennwertes eines Elements des Querverbundsystems erhalten wird.

In einer bevorzugten Ausführungsform umfasst das Gewichtungstool ein neuronales Netzwerk. Auf diese Weise kann das Gewichtungstool ohne externe Einflussnahme auf veränderte technische Zusammenhänge reagieren. Das neuronale Netzwerk des Gewichtungstools kann eines der zuvor beschriebenen neuronalen Netzwerke umfassen.

Die zuvor beschriebenen neuronalen Netzwerke und/oder die zuvor beschriebenen neuronalen Netzwerkverbunde können in einer bevorzugten Ausführungsform ein Teil eines Systems zum Regeln einer Energieträgerverteilung oder Brennstoffverteilung in einem Querverbundsystem sein, wobei das Querverbundsystem mit einem thermischen Netz gekoppelt ist und wobei das System umfasst: eine Eingabeeinrichtung, welche so konfiguriert ist, dass sie energetische Daten des Querverbundsystems und thermische Daten des thermischen Netzes erfasst und Eingabedaten aus den thermischen Daten des thermischen Netzes und den energetischen Daten des Querverbundsystems erstellt; und ein Regelungselement, welches so konfiguriert ist, dass auf Grundlage der Prognose des neuronalen Netzwerks oder des neuronalen Netzwerkverbunds eine Regelungsempfehlung einer Steuergröße des Querverbundsystems erstellt wird.

In einer bevorzugten Ausführungsform umfasst das Querverbundsystem mindestens zwei Elemente aus der Gruppe von einem Kraftwerk, einem Heizkraftwerk und einem Heizwerk, wobei das Querverbundsystem mit einem elektrischen Netz gekoppelt ist.

Die Systeme und/oder die zuvor beschriebenen neuronalen Netzwerke und/oder Netzwerkverbunde können weiterhin so konfiguriert sein, dass sie die Verfahrensschritte der verschiedenen zuvor beschriebenen Ausführungsformen des Verfahrens implementieren und/oder Mittel oder Vorrichtungen umfassen, welche so konfiguriert sind, dass sie die Verfahrensschritte der verschiedenen zuvor beschriebenen Ausführungsformen des Verfahrens implementieren.

In einem weiteren Aspekt bezieht sich die Erfindung auf ein Computerprogramm oder Computerprogrammprodukt, welches maschinenlesbare Instruktionen umfasst, die ein Verfahren mit den folgenden Schritten implementieren: Erfassen energetischer Daten eines Querverbundsystems; Erfassen thermischer Daten eines thermischen Netzes in thermischer Verbindung mit dem Querverbundsystem; Erstellen von Eingabedaten für ein neuronales Netzwerk aus den erfassten energetischen Daten und thermischen Daten; Erhalten von Anregungspotentialen einer Ausgabeebene des neuronalen Netzwerks; Prognostizieren eines Kennwertes eines Elements des Querverbundsystems auf Grundlage der Anregungspotentiale des neuronalen Netzwerks; und Erstellen einer Regelungsempfehlung für das Element des Querverbundsystems auf Grundlage des prognostizierten Kennwerts.

Die bevorzugten Ausführungsformen des Computerprogramms können außerdem maschinenlesbare Instruktionen umfassen, die ein Verfahren mit den in den zuvor beschriebenen Aspekten und Ausführungsformen der Erfindung verwendeten Schritten implementieren. Zum Beispiel kann das Erstellen von Eingabedaten das Erfassen von Wetterdaten umfassen.

In einigen bevorzugten Ausführungsformen umfasst das Computerprogramm maschinenlesbare Instruktionen, die die zuvor beschriebenen Systeme und/oder die zuvor beschriebenen neuronalen Netzwerke und/oder die zuvor beschriebenen Netzwerkverbunde kontrollieren.

In weiteren bevorzugten Ausführungsformen implementieren die maschinenlesbaren Instruktionen Teile oder die Gesamtheit der zuvor beschriebenen Systeme und/oder der zuvor beschriebenen neuronalen Netzwerke und/oder der zuvor beschriebenen Netzwerkverbunde. Dazu können die Merkmale der Verfahren beliebig mit den Merkmalen der Systeme und/oder der neuronalen Netzwerke und/oder der Netzwerkverbunde kombiniert werden.

### Detaillierte Beschreibung der Ausführungsformen

Die erfindungsgemäßen Eigenschaften und die verschiedenen Vorteile der Verfahren, Vorrichtung und Computerprogramme oder Computerprogrammprodukte erschließen sich am besten aus einer detaillierten Beschreibung bevorzugter Ausführungsformen mit Verweis auf die beiliegenden Zeichnungen, wobei:
Fig. 1 ein Flussdiagramm zur Optimierung eines energetischen Querverbundsystems mit einem rekurrenten neuronalen Netzwerk veranschaulicht;
Fig. 2 ein Beispiel eines Querverbundsystem in Verbindung mit gekoppelten Systemen und einem Optimierungs- und Prognosesystem veranschaulicht;
Fig. 3 ein Diagramm eines beispielhaften Systems zur Erstellung einer Regelungsempfehlung für ein Querverbundsystem darstellt;
Fig. 4 ein Schema eines künstlichen neuronalen Netzwerks veranschaulicht; und
Fig. 5 ein Schema für einen beispielhaften neuronalen Netzwerkverbund zur Erstellung einer Regelungsempfehlung für ein Querverbundsystem veranschaulicht.

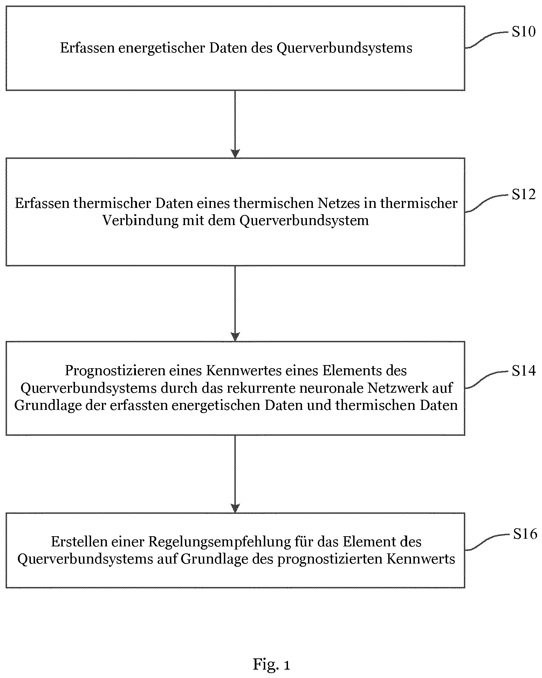

Eine Ausführungsform des zuvor beschriebenen Verfahrens ist anhand eines Flussdiagramms in Fig. 1 schematisch dargestellt. Dabei umfasst das Verfahren zur Optimierung eines energetischen Querverbundsystems mit einem rekurrenten neuronalen Netzwerk: Erfassen S10 energetischer Daten des Querverbundsystems; Erfassen S12 thermischer Daten eines thermischen Netzes in thermischer Verbindung mit dem Querverbundsystem; Prognostizieren S14 eines Kennwertes eines Elements des Querverbundsystems durch das rekurrente neuronale Netzwerk auf Grundlage der erfassten energetischen Daten und thermischen Daten; und Erstellen S16 einer Regelungsempfehlung für das Element des Querverbundsystems auf Grundlage des prognostizierten Kennwerts.

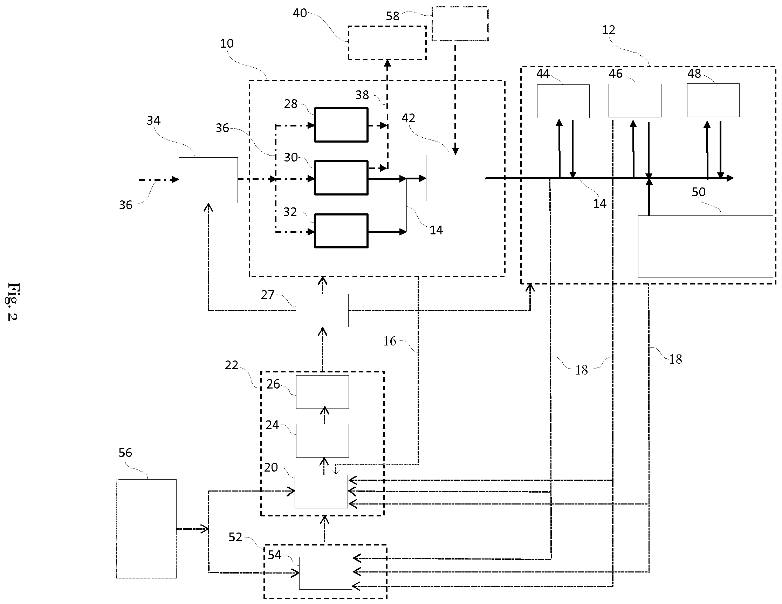

Das erfindungsgemäße Verfahren kann für den Fall einer erhöhten Komplexität des betrachteten und/oder optimierten Systems vorzugswürdig sein. Einige der Vorteile des Verfahrens können sich daher aus einem spezifischen Beispiel eines Querverbundsystems in Verbindung mit gekoppelten Systemen und Regelungssystemen, welches in Fig. 2 dargestellt ist, besser erschließen.

Das Beispiel aus Fig. 2 zeigt ein Querverbundsystem 10 in thermischer Verbindung mit einem thermischen Netz 12. Die thermische Verbindung wird durch die thermischen Flüsse 14 dargestellt. Das Querverbundsystem 10 stellt energetische Daten 16 bereit. Das thermische Netz 12 stellt thermische Daten 18 bereit. Die energetischen Daten 16 und die thermischen Daten 18 werden von einer Eingabeeinrichtung 20 des Systems 22 erfasst. Die Eingabeeinrichtung 20 erstellt auf Grundlage der energetischen Daten 16 und der thermischen Daten 18 Eingabedaten für das neuronale Netzwerk 24. Das neuronale Netzwerk 24 erstellt auf Grundlage der Eingabedaten eine Prognose eines Kennwerts eines Elements 28,30,32 des Querverbundsystems 10. Die Prognose des Kennwerts wird für ein Regelungselement 26 bereitgestellt, wobei das Regelungselement 26 eine Regelungsempfehlung einer Steuergröße für eine Steuereinheit 27 des Querverbundsystems 10 auf Grundlage der Prognose erstellt.

Fig. 2 zeigt außerdem weitere beispielhafte Ausführungsdetails des Querverbundsystems 10. In dem Beispiel umfasst das Querverbundsystem 10 ein Kraftwerk 28, ein Heizkraftwerk 30 und ein Heizwerk 32. Ein Energieträgerspeicher 34 kann über einen Energieträgerfluss 36 einen Kraftstoff oder Brennstoff für das Kraftwerk 28, das Heizkraftwerk 30 und das Heizwerk 32 bereitstellen. Das Kraftwerk 28 und das Heizkraftwerk 30 sind über einen elektrischen Verbindungsweg 38 mit einem elektrischen Netz 40 gekoppelt. Das Kraftwerk 30 und das Heizwerk 32 sind über den thermischen Fluss 14 mit einem ersten thermischen Speicher 42 gekoppelt.

Das thermische Netz 12 aus Fig. 2 umfasst eine industrielle Anlage 44, eine Wohnanlage 46, einen zweiten thermischen Speicher 48 und einen dezentralen Erzeuger 50.

In Fig. 2 sind die industrielle Anlage 44 und die Wohnanlage 46 sowohl als Verbraucher als auch als Erzeuger von Wärmeflüssen 14 dargestellt. Eine solche Situation kann in der Wohnanlage 46 durch die gleichzeitige Verwendung regenerativer Erzeugungskonzepte, wie Solarkollektoren auf Dächern der Wohnanlage 46, und klassischen Wärmeverbrauch entstehen. In der industriellen Anlage 44 kann sowohl ein Wärmeverbrauch, zum Beispiel zur Heizung verschiedener Elemente der industriellen Anlage 44, als auch ein Wärmeabfluss als Nebenprodukt eines industriellen Prozesses jeweils zu einer Erzeugung und einem Verbrauch von Energieträgern führen.

Die Verbrauchsdynamiken der verschiedenen Elemente des thermischen Netzes 12 können sich unterscheiden und durch eine räumliche Trennung eine Optimierung vorzugswürdig machen. Zum Beispiel kann die Verbrauchsdynamik von industriellen Anlagen 44 einen Verbrauch von Energieträgern und eine gleichzeitige Produktion von Abwärmeflüssen während Kernarbeitszeiten unterstützen, während eine Erzeugungsgröße mittels regenerativer Energiekonzepte und eine Verbrauchsgröße eines Energieträgers einer Wohnanlage 46 eine starke Abhängigkeit von Wetterdaten und/oder einem Datum zeigen kann. Der Verlust einer Wärmeleistung in Abhängigkeit einer Distanz eines Elements des Querverbundsystems 10 zu einem Element des thermischen Netzes 12 kann es vorzugswürdig machen, die Erzeugung eines Energieträgers für das thermische Netz 12 dynamisch auf der Ebene des Querverbundsystems 10 zu optimieren.

Das thermische Netz 12 aus Fig. 2 zeigt die Erfassung der thermischen Daten 18 beispielhaft durch lokale Messungen der Zu- und Rückflusstemperatur entlang des Wärmeflusses 14 und durch einen Informationsfluss der thermischen Daten 18 aus der Wohnanlage 46, wie er zum Beispiel durch Smartmeter bereitgestellt werden kann.

Die technischen Indikatoren 16,18 wie die energetischen Daten 16 und die thermischen Daten 18 werden außer an die Eingabeeinrichtung 20 auch an den Trainingsserver 52 mit dem Datenspeicher 54 weitergeleitet. Die technischen Indikatoren können sich beispielsweise durch Werte einer Temperatur und/oder einer Leistung und/oder einer Effizienz und/oder eines Füllstands und/oder eines Volumens und/oder eines Gewichts und/oder eines Volumenstroms und/oder eines Massestroms und/oder eines Drucks und/oder eines Verschleiß- und/oder Verschmutzungszustands und/oder einer Leckgröße und/oder deren Verläufen und/oder Gradienten ausdrücken.

Zusätzlich werden in Fig. 2 externe Daten aus einer Schnittstelle 56 für die Eingabeeinrichtung 20 und den Trainingsserver 52 bereitgestellt.

Der Trainingsserver 52 kann die historischen Daten der externen Daten und der technischen Indikatoren 16, 18 aus dem Datenspeicher 54 verwenden, um ein Modell des neuronalen Netzwerks 24 zu trainieren. Weiterhin kann der Trainingsserver 52 ältere Modelle des neuronalen Netzwerks 24 bereitstellen. Auf diese Weise kann die Arbeitsweise des neuronalen Netzwerks 24 bei Bedarf an veränderte Bedingungen in dem Querverbundsystem 10 oder in dem thermischen Netz 12 angepasst werden.

In Fig. 2 ist auch die Möglichkeit gezeigt, das Querverbundsystem 10 über Sektorkopplung mit einem Power-to-X Sektor 58 zu koppeln. Die Sektorkopplung kann dabei eine Heizleistung an den thermischen Speicher 42 bereitstellen, um eine Varianz einer Wärmeproduktion auszugleichen, oder kann eine Varianz der Wärmeproduktion für die Produktion eines Energieträgers und/oder Stoffes verwenden.

In einem solchen Beispiel können Ausführungsformen des zuvor beschriebenen Verfahrens implementiert werden, indem eine Reihe von kurz- und/oder langfristigen Trainingsdaten, z.B. Messdaten und/oder simulierte Daten der letzten Monate und/oder Jahre, in dem Datenspeicher 54 gesammelt und/oder bereitgestellt werden. Die Trainingsdaten können in Eingabedaten und prognostizierte Kennwerte eingeteilt werden.

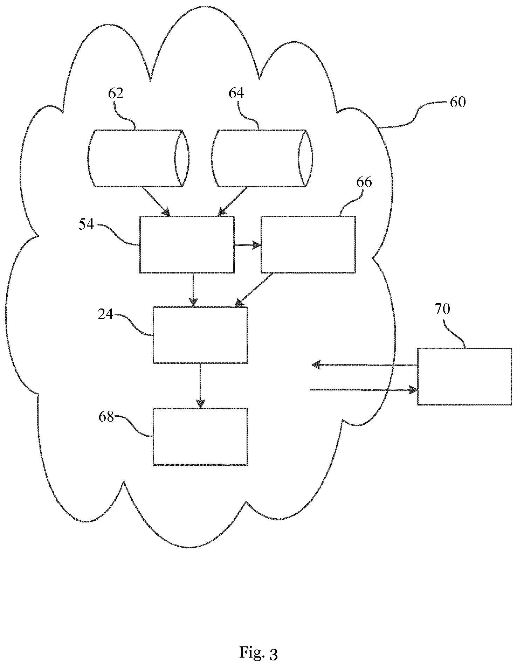

In Fig. 3 ist eine Ausführungsform eines Systems 22,60 zur Optimierung eines Querverbundsystems 10 veranschaulicht. Eine Eingabeeinrichtung 20,62,64 umfasst dabei ein Interface für technische Indikatoren 62 und eine externe Schnittstelle 64 für externe Daten. Die Eingabeeinrichtung 20,62,64 kann die technischen Indikatoren 62 und die externen Daten 64 in einem Datenspeicher 54 sammeln. Die technischen Indikatoren 62 und die externen Daten 64 werden an das künstliche neuronale Netzwerk 24 und das künstliche neuronale Trainingsnetzwerk 66 weitergegeben. Das neuronale Netzwerk 24 erstellt einen prognostizierten Kennwert auf Grundlage der technischen Indikatoren 62 und der externen Daten 64 und übergibt den prognostizierten Kennwert an das Regelungselement 68. Das Regelungselement 68 erzeugt eine Regelungsempfehlung auf Grundlage des produzierten Kennwerts und kann die Regelungsempfehlung beispielsweise über ein Regelungsinterface 70 für einen Anwender oder für eine Steuereinrichtung bereitstellen.

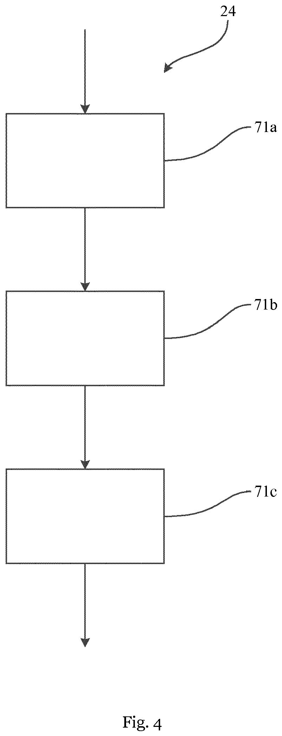

Ein künstliches neuronales Netzwerk 24 ist in Fig. 4 schematisch dargestellt. Eine Eingabeebene 71a empfängt Eingabedaten und ist über mindestens eine versteckte Ebene 71b, wie die zweite Ebene, mit einer Ausgabeebene 71c gekoppelt. Die Ausgabeebene 71c stellt Ausgabepotentiale bereit.

Eine Eingabeebene 71a des neuronalen Netzwerks 24 kann so konfiguriert werden, dass die Eingabedaten auf Eingangspotentiale abgebildet werden können. Zum Beispiel können die Eingabedaten durch eine Binärkodierung auf binäre Aktivierungspotentiale von Eingangsneuronen abgebildet werden. Außerdem können die Eingabedaten auch durch eine stetige Abbildung auf ein numerisches Aktivierungspotential, zum Beispiel zwischen o und 1, abgebildet werden, oder es kann eine Kombination dieser Kodierungsmöglichkeiten verwendet werden.

Es kann vorzugswürdig sein, das neuronale Netzwerk 24 auf die Gegebenheiten des thermischen Netzes 12 und des Querverbundsystems 10 anzupassen. Zum Beispiel können Teile der Eingabeebene 71a, die für die Eingabe vergleichbarer und/oder identischer technischer Indikatoren 62 und/oder externer Daten 64 konfiguriert sind, parallelisiert werden, um die Anzahl unabhängiger zu optimierender Parameter in dem neuronalen Netzwerk 24 zu verkleinern. Die Eingabeebene 71a kann zum Beispiel identische künstliche Neuronen für identische Smartmeter aus einer Wohnanlage 46 in dem thermischen Netz 12 bereitstellen.

Die künstlichen Neuronen der Eingabeebene 71a können im Folgenden gekoppelt werden, um ein kausalen Zusammenhang zwischen den verschiedenen technischen Indikatoren 62 und externen Daten 64 zu ermöglichen. Es kann vorzugswürdig sein, nicht alle Neuronen der Eingabeebene 71a jeweils mit allen Neuronen der zweiten Ebene zu koppeln, sondern die Anzahl der Kopplungen gemäß dem Aufbau des Querverbundsystems 10 und/oder des thermischen Netzes 12 einzuschränken.

Dabei kann es in Ausführungsformen zum Beispiel vorteilhaft sein, in einer zweiten Ebene künstliche Neuronen der Eingabeebene 71a mit Bezug zu ähnlichen Sektoren und/oder mit Bezug zu Elementen mit ähnlicher technischer Aufgabe zu koppeln. Die ähnlichen Sektoren können Teilsysteme des thermischen Netzes 12 und/oder des Querverbundsystems 10 sein, deren energetische Kopplung (z.B. eine Wärmekopplung oder eine elektrische Kopplung) und/oder deren geographische Position zusammenhängen. Die Elemente mit ähnlicher technischer Aufgabe können beispielsweise eine Auswahl von Heizkraftwerken 30 und/oder eine Auswahl von Heizwerken 32 und/oder eine Auswahl von Kraftwerken 28 und/oder eine Auswahl von thermischen Speichern 42,48 und/oder eine Auswahl von Sensoren für externe Daten 64 und/oder technische Indikatoren 62 und/oder eine Kombination verschiedener Erzeuger und/oder Verbraucher usw. sein. Eine Kopplung zwischen den verschiedenen Ebenen des neuronalen Netzwerks 24 kann auch anhand geographischer und/oder technischer Zusammenhänge zwischen den technischen Indikatoren 62 und/oder den externen Daten 64 erfolgen.

Die Reduzierung der Kopplungen durch die Anpassung des künstlichen neuronalen Netzwerks 24 kann einen kausalen Zusammenhang zwischen Indikatoren herstellen und/oder eine zu optimierende Parameterzahl verringern.

In einer bevorzugten Ausführungsform umfasst das Verfahren daher ein Anpassen des künstlichen neuronalen Netzwerks 24 auf die untersuchten externen Daten 64 und/oder technischen Indikatoren 62 und/oder prognostizierten Kennwerte.

In einer weiteren bevorzugten Ausführungsform umfasst das Verfahren ein Anpassen des künstlichen neuronalen Netzwerks 24 auf den Aufbau des Querverbundsystems 10 und/oder auf den Aufbau des thermischen Netzes 12. Zum Beispiel kann das Anpassen des künstlichen neuronalen Netzwerks 24 ein Reduzieren von Kopplungsverbindungen des neuronalen Netzwerks 24 entsprechend des Aufbaus des Querverbundsystems 10 und/oder des Aufbaus des thermischen Netzes 12 umfassen; und insbesondere ein Reduzieren der Kopplungsverbindungen des neuronalen Netzwerks 24 entsprechend eines Bezugs der Eingangspotentiale der künstlichen Neuronen zu ähnlichen Sektoren des Querverbundsystems 10 und/oder des thermischen Netzes 12 und/oder entsprechend eines Bezugs der Eingangspotentiale der künstlichen Neuronen zu Elementen des Querverbundsystems 10 und/oder des thermischen Netzes 12 mit ähnlicher technischer Aufgabe.

Die Eingabeebene 71a kann über eine beliebige Anzahl von Zwischenebenen mit der Ausgabeebene 71c des neuronalen Netzwerks 24 gekoppelt werden. Die Ausgabeebene 71c des neuronalen Netzwerks 24 kann die prognostizierten Kennwerte auf die Aktivierungspotentiale der künstlichen Neuronen der Ausgabeebene 71c abbilden.

Nach dem Anpassen des künstlichen neuronalen Netzwerks 24 auf die untersuchten externen Daten 64 und/oder technischen Indikatoren 62 und/oder prognostizierten Kennwerte kann das künstliche neuronale Netzwerk 24 mit den gesammelten Trainingsdaten trainiert werden. Dazu werden Gewichtungsfaktoren und Aktivierungsfunktionen der einzelnen künstlichen Neuronen des neuronalen Netzwerks 24 initialisiert und anschließend durch ein Optimierungsverfahren wie Backpropagation angepasst, um die Trainingsdaten optimal abzubilden.

Der Erfolg des Trainings für die Prognosequalität und/oder die benötigte Menge an Trainingsdaten kann durch ein Anpassen des künstlichen neuronalen Netzwerks 24 auf die Struktur des Querverbundsystems 10 beeinflusst werden.

Nach Abschluss der Trainingsphase kann das neuronale Netzwerk 24 aktuelle externe Daten 64 und/oder technische Indikatoren 62 empfangen, um eine Prognose der zu prognostizierenden Kennwerte zu erhalten und daraus eine Regelungsempfehlung für das Querverbundsystem 10 abzuleiten.

Optional kann ein Trainingsnetzwerk 66 zusätzlich mit den aktuellen Daten trainiert werden, um eine Prognosequalität nach einer Veränderung in dem Querverbundsystem 10 zu verbessern oder um eine laufende Anpassung des künstlichen neuronalen Netzwerks 24 auf Veränderungen zu ermöglichen. Zum Beispiel kann das künstliche neuronale Netzwerk 24 mit dem Trainingsnetzwerk 66 ausgetauscht werden, wenn eine Prognosequalität des künstlichen neuronalen Netzwerks 24 aufgrund von einer Vielzahl von Veränderungen im Aufbau des Querverbundsystems 10 unzufriedenstellend geworden ist.

Um die Effizienz der Ausführungsformen der zuvor beschriebenen Verfahren und/oder neuronalen Netzwerke 24 und/oder neuronalen Netzwerkverbunde 24 und/oder Systeme 22 sicherzustellen, kann es vorzugswürdig sein, die Auswahl der technischen Indikatoren 62 und/oder der externen Daten 64 auf einen betrachteten und/oder optimierten Gesichtspunkt abzustimmen. Es kann daher vorteilhaft sein, die Auswahl der technischen Indikatoren 62 und/oder der externen Daten 64 auf die Auswahl der prognostizierten Kennwerte abzustimmen. Außerdem kann die Kopplung der Ebenen auf die Auswahl der prognostizierten Kennwerte abgestimmt werden.

Zum Beispiel kann eine kurzfristige Prognose einer erwarteten Last für verschiedene Erzeuger von Energieträgern, wie Wärme und Strom, in unterschiedlichen Sektoren des Querverbundsystems 10 ein starke Abhängigkeit von einer Rückflusstemperatur und/oder einem Energieverbrauch ermittelt aus Smartmeter-Daten und/oder dezentralen Erzeugungsgrößen, wie einer prognostizierten Solarstrahlungsdichte in dem Bereich des Sektors und/oder einem Speicherstand eines thermischen Speichers 42,48 aufweisen. Das Anpassen des neuronalen Netzwerks 24 kann anhand dieser Parameter eine verbesserte kurzfristige Prognose begünstigen.

In einem weiteren Beispiel kann eine langfristige Prognose eines Wartungsbedarfs eines Elements 28,30,32 des Querverbundsystems 10 eine starke Abhängigkeit von Sensordaten wie einem Luftüberschuss in der Brennkammer und/oder Dampftemperaturen und/oder Dampfdrücken und/oder Dampfmassenströmen und/oder Verschmutzungszuständen und/oder weiteren Kesselparametern aufweisen. Die Analyse der Parameter des Querverbundsystems 10 kann hierbei eine erweiterte Datenmenge ermöglichen, um die Prognosequalität zu verbessern, und kann systematische Abhängigkeiten der Sensordaten von externen Größen, wie den thermischen Daten 18 und/oder den energetischen Daten 16 und/oder den externen Daten 64 und/oder den Sensordaten anderer Elemente 28,30,32 des Querverbundsystems 10, berücksichtigen. Der Wartungsbedarf der Elemente 28,30,32 des Querverbundsystems 10 kann daher besser erfasst werden.

Der Wartungsbedarf und die prognostizierte Last des Querverbundsystems 10 können dabei über die Prognose von Ausfallzeiten und ausfallenden Erzeugungsmengen des zu wartenden Elements des Querverbundsystems 10 zusammenhängen. Das künstliche neuronale Netzwerk 24 kann zum Beispiel unter Beachtung prognostizierter Wartungszeiten und erwarteter Lasten auf die Prognose eines Produktionsdefizits, welches in Ausführungsformen durch gekoppelte Systeme ausgeglichen werden kann, trainiert werden.

In einigen Ausführungsformen kann auch die langfristige Prognose eines neuronalen Netzwerks 24, wie einem LSTM-Netzwerk verwendet werden, um einen Kraftstoffbedarf anhand von z.B. Speicherständen von Kraftstoffspeichern 34 und/oder thermischen Speichern 42, 48 und/oder Wetterdaten und/oder technischen Indikatoren 62 zu bestimmen, und kann eine optimale Ausnutzung der Speicherkapazitäten und/oder Produktionseffizienzen erlauben und es möglich machen, eine Gefahr von Brennstoff- oder Kraftstoffengpässen zu vermeiden. Eine solche Vorhersage kann vorzugswürdig sein, wenn eine Vielzahl verschiedener Kraftstofftypen mit langen Lieferzeiten für Erzeuger verschiedener Energieträger mit unterschiedlichen Produktionseffizienzen bereitzustellen ist.

In einigen Ausführungsformen kann auch ein neuronaler Netzwerkverbund aus neuronalen Netzwerken 24 mit unterschiedlichen Spezialisierungen in einer Ensemble-Architektur verwendet werden oder für spezifische parallele oder überlappende Aufgabenbereiche verwendet werden. Zum Beispiel können verschiedene künstliche neuronale Netzwerke 24 mit verschiedenen Anpassungen kombiniert und die Prognosen der verschiedenen künstlichen neuronalen Netzwerke 24 durch ein Gewichtungstool verbunden werden.

Die verschiedenen neuronalen Netzwerke 24 können zum Beispiel für die Prognose von Zuständen von Teilnetzen des thermischen Netzes 12 und/oder des energetischen Netzes 10 optimiert werden, und eine Prognose eines Kennwerts für eine Regelungsempfehlung kann durch ein nachgeschaltetes neuronales Netzwerk 24 auf Grundlage der Prognosen der vorgeschalteten Netzwerke erstellt werden. Dabei kann auch die Kombination von neuronalen Netzwerken 24 unterschiedlichen Typs vorzugswürdig sein.

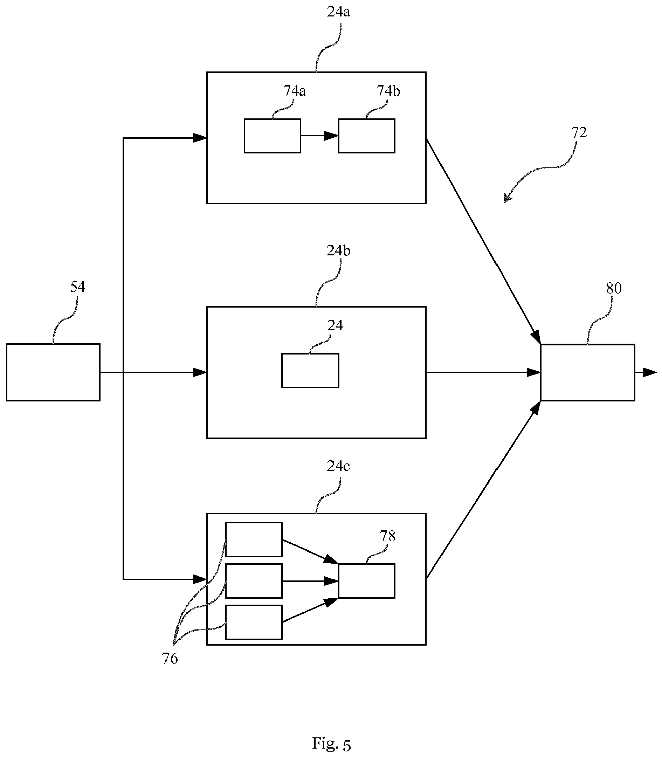

Ein Beispiel eines neuronalen Netzwerkverbunds 72 ist in Fig. 5 dargestellt. Das Beispiel des neuronalen Netzwerkverbunds 72 bezieht technische Indikatoren 62 und externe Daten 64 aus der Datenbank 54. Die verschiedenen künstlichen neuronalen Netzwerke 24a, 24b, 24c erhalten jeweils eine Auswahl der technischen Indikatoren 62 und der externen Daten 64.

Ein erstes neuronales Netzwerk 24a kann vom Typ Sequence-to-Sequence sein und kann technische Indikatoren 62 empfangen. In manchen Ausführungsformen kann es vorzugswürdig sein, wenn das neuronale Netzwerk 24a vom Typ Sequence-to-Sequence keine Wetterdaten empfängt, um eine Prognose eines Kennwerts unabhängig von einer ungenauen Wetterprognose zu machen.

Das erste neuronale Netzwerk 24a vom Typ Sequence-to-Sequence kann ein Encode-Netzwerk 74a und ein Decode-Netzwerk 74b umfassen. Das Encode-Netzwerk 74a kann ein neuronales Netzwerk 24 sein und kann ein LSTM-Netzwerk umfassen. Das Encode-Netzwerk 74a empfängt die Daten aus der Datenbank 54 für eine bestimmte Sequenzlänge, wie z.B. 48 Stunden in einer halbstündigen Staffelung, und erstellt einen kodierten Vektor der Sequenz für das Decode-Netzwerk 74b. Das Decode-Netzwerk 74b kann ein ähnliches neuronales Netzwerk 24 wie das Encode-Netzwerk 74a sein und bildet den kodierten Vektor auf eine Ausgabeebene 71c (vgl. Fig. 4) ab, die einer Sequenzprognose des prognostizierten Kennwerts entsprechen kann.

Die Verwendung eines Netzwerks vom Typ Sequence-to-Sequence kann daher vorteilhaft für die Prognose von Verläufen und Gradienten eines Kennwerts sein.

Als Beispiel empfängt das Encode-Netzwerk 74a eine Sequenz von Lastdaten des Querverbundsystems 10, und die Ausgabeebene 71c des Decode-Netzwerks 74b kann eine prognostizierte Sequenz der Lastdaten des Querverbundsystems 10 sein.

Ein zweites neuronales Netzwerk 24b kann ein LSTM-Netzwerk sein, das Wetterdaten und technische Indikatoren 62 empfängt. Das LSTM-Netzwerk kann eine langfristige Prognose eines Kennwerts bereitstellen. Zum Beispiel kann das zweite neuronalen Netzwerk 24b ein Wartungsbedürfnis eines Elements des Querverbundsystems 10 auf der Grundlage einer langfristigen Veränderung von Kesselparametern und/oder unter Berücksichtigung allgemeiner Trends zwischen ähnlichen Kraftwerkstypen prognostizieren.

Ein drittes Netzwerk 24c kann einen Entscheidungswald aus mindestens einem Entscheidungsbaum 76 und einem Boosting-Verfahren 78 umfassen. Die Entscheidungsbäume 76 umfassen heuristische Klassifizierungsregelungen, wie zum Beispiel Schwellenwerte eines Kesseldrucks eines Elements des Querverbundsystems 10, um eine Klassifizierung wie zum Beispiel einen Wartungsbedarf zu erhalten. Die Prognosen oder Klassifizierungen der Entscheidungsbäume 76 werden an das Boosting-Verfahren 78 weitergegeben. Das Boosting-Verfahren 78 erstellt auf Grundlage der Klassifizierungen eine Prognose eines Kennwerts des Querverbundsystems 10.

Das Boosting-Verfahren kann zum Beispiel auf Grundlage eines bekannten Verfahrens wie AdaBoost oder Random Forrest implementiert werden.

Das dritte neuronale Netzwerk 24c kann die Berücksichtigung heuristischer Regeln erlauben und kann eine Einsichtnahme in den Prognosevorgang durch einen Anwender ermöglichen.

Die Prognosen des ersten, zweiten und dritten künstlichen neuronalen Netzwerks 24a, 24b, 24c werden in Fig. 5 von dem Gewichtungstool 80 empfangen, welches eine gewertete Prognose der Kennwerte erstellt. Dazu kann es vorzugswürdig sein, Teile der Eingabedaten der neuronalen Netzwerke 24 und/oder der technischen Indikatoren 62 und/oder der externen Daten für das Gewichtungstool 80 bereitzustellen.

Zum Beispiel kann eine Prognose einer Last des Ensembles 72 in einem größeren Ausmaß auf die Prognose des neuronalen Netzwerks vom Typ Sequence-to-Sequence gestützt sein, wenn eine Wetterprognose mit starken Ungenauigkeiten versehen ist. In einem anderen Beispiel kann die Prognose eines neuronalen Netzwerks vom Typ Sequence-to-Sequence ungenauer sein, wenn ein Prognosedatum nahe bei einem Datum eines Ferienbeginns liegt.

Durch die Kombination der Prognosen durch das Gewichtungstool 80 können die Vorteile verschiedener Netzwerktypen kombiniert werden. Das Gewichtungstool 80 kann außerdem ein neuronales Netzwerk 24 umfassen, um die Prognosequalität der verschiedenen Netzwerktypen für die Prognose verschiedener Kennwerte besser zu bewerten. In einigen Ausführungsformen können jedoch auch eine statistische Methode, eine heuristische Regel und/oder ein arithmetisches Mittel verwendet werden, um eine gewertete Prognose zu erhalten.

Die vorhergehende Beschreibung der bevorzugten Ausführungsformen, Beispiele und Zeichnungen soll nur dazu dienen, die Erfindung und die damit verbundenen Vorteile zu veranschaulichen, und soll nicht so verstanden werden, dass sie den Schutzbereich einschränkt. Der Schutzbereich der Erfindung soll vielmehr ausschließlich anhand der beigefügten Ansprüche ermittelt werden.

## Patentansprüche

1. Verfahren zur Optimierung eines energetischen Querverbundsystems (10) mit einem rekurrenten neuronalen Netzwerk (24), wobei das Verfahren umfasst:
Erfassen energetischer Daten (16) des Querverbundsystems (10);
Erfassen thermischer Daten (18) eines thermischen Netzes (12) in thermischer Verbindung mit dem Querverbundsystem (10);
Prognostizieren eines Kennwertes eines Elements (14,28,30,32,34,36,38,42) des Querverbundsystems (10) durch das rekurrente neuronale Netzwerk (24) auf Grundlage der erfassten energetischen Daten (16) und thermischen Daten (18); und
Erstellen einer Regelungsempfehlung für das Element (14,28,30,32,34,36,38,42) des Querverbundsystems (10) auf Grundlage des prognostizierten Kennwerts.

2. Verfahren nach Anspruch 1, wobei das Prognostizieren des Kennwerts durch das rekurrente neuronale Netzwerk (24) umfasst:
Erhalten eines Eingabevektors aus historischen Wetterdaten; und
Erhalten eines Eingabevektors aus prognostizierten Wetterdaten;
wobei die historischen Wetterdaten und die prognostizierten Wetterdaten eine Luftfeuchtigkeit und/oder eine Windgeschwindigkeit und/oder eine Solarstrahlungsdichte und/oder eine Temperatur umfassen, und insbesondere eine geographische Abhängigkeit der Wetterdaten in dem geographischen Bereich des thermischen Netzes (12) umfassen.

3. Verfahren nach einem der vorhergehenden Ansprüche, wobei das Querverbundsystem (10) mit einem elektrischen Netz (40) gekoppelt ist, und
wobei der prognostizierte Kennwert einen erzeugten elektrischen Strom umfasst, und insbesondere eine Differenz eines erzeugten Stroms und eines erwarteten Strombedarfs umfasst.

4. Verfahren nach einem der vorhergehenden Ansprüche, wobei das Verfahren umfasst:
Erhalten eines Eingabevektors aus Produktionskapazitäten und/oder Speicherkapazitäten einer Mehrzahl von Energieträgern und Kraftstofftypen, und wobei die Regelungsempfehlung eine Menge und/oder eine Produktionskapazität und/oder einen Typ eines produzierten Energieträgers und/oder Stoffes umfasst.

5. Verfahren nach einem der vorhergehenden Ansprüche, wobei die Regelungsempfehlung eine Lastverteilung der Elemente (14,28,30,32,34,36,38,42) des Querverbundsystems (10) umfasst, und insbesondere eine Energieträgerverteilung oder Brennstoffverteilung zwischen Elementen (14,28,30,32,34,36,38,42) des Querverbundsystems (10) und/oder eine Wartungsplanung umfasst.

6. Verfahren nach einem der vorhergehenden Ansprüche, wobei das rekurrente neuronale Netzwerk (24) zumindest ein Teilnetzwerk (24) vom Typ Long-Short-Term-Memory (24b) umfasst.

7. Verfahren nach einem der vorhergehenden Ansprüche, wobei das rekurrente Netzwerk (24) auf einer Ensemble-Architektur (72) beruht, wobei die Ensemble-Architektur (72) mindestens ein vorgeschaltetes Netzwerk (24,24a,24b,24c) aus der Gruppe aus
einem rekurrenten Netzwerk vom Typ Long-Short-Term-Memory (24b),
einem rekurrenten Netzwerk vom Typ Sequence-to-Sequence (24a), und
einem Entscheidungswald (24c) aus mindestens einem Entscheidungsbaum und einem Boosting-Verfahren umfasst; und wobei die Ensemble-Architektur (72)
ein Gewichtungstool (80) umfasst, insbesondere ein gewichtendes neuronales Netzwerk (24);
wobei das Prognostizieren des Kennwerts durch das rekurrente neuronale Netzwerk (24,72) umfasst:
Erhalten einer Prognosegröße eines vorgeschalteten Netzwerks (24,24a,24b,24c) durch das Gewichtungstool (80); und
Prognostizieren des Kennwerts mittels des Gewichtungstools (80).

8. Verfahren nach Anspruch 7, wobei die Ensemble-Architektur (72) das neuronale Netzwerk vom Typ Sequence-to-Sequence (24a) umfasst,
wobei das neuronale Netzwerk vom Typ Sequence-to-Sequence (24a) so eingerichtet ist, dass eine Sequenzlänge ein Tag, zwei Tage oder eine Woche ist.

9. Künstliches rekurrentes neuronales Netzwerk (24) zur Optimierung eines Querverbundsystems (10), wobei das neuronale Netzwerk (24) umfasst:
eine Eingabeebene (71a), welches Eingabedaten aus energetischen Daten (16) eines Querverbundsystems (10) und aus thermischen Daten (18) eines thermischen Netzes (12) erhält;
mindestens eine versteckte Ebene (71b), die mit der Eingabeebene (71a) gekoppelt ist;
eine Ausgabeebene (71c), die mit der mindestens einen versteckten Ebene (71b) gekoppelt ist und so konfiguriert ist, dass ein Anregungspotential der Ausgabeebene (71c) auf eine Prognose eines Kennwertes eines Elements (14,28,30,32,34,36,38,42) des Querverbundsystems (10) abgebildet wird.

10. Künstliches rekurrentes neuronales Netzwerk (24) nach Anspruch 9, wobei das rekurrente neuronale Netzwerk (24) umfasst:
ein rekurrentes Netzwerk vom Typ Long-Short-Term-Memory (24b) und/oder
ein rekurrentes Netzwerk vom Typ Sequence-to-Sequence (24a) und/oder
eine Kombination (24c) eines Entscheidungswaldes aus mindestens einem Entscheidungsbaum mit einem Boosting-Verfahren.

11. Neuronaler Netzwerkverbund (72), welcher umfasst:
mindestens zwei vorgeschaltete neuronale Netzwerke (24,24a,24b,24c) nach Anspruch 9 oder 10; und
ein Gewichtungstool (80), welches so eingerichtet ist, dass aus den Anregungspotentialen der Ausgabeebene (71c) der mindestens zwei vorgeschalteten neuronalen Netzwerke (24,24a,24b,24c) eine Prognose eines Kennwertes eines Elements (14,28,30,32,34,36,38,42) des Querverbundsystems (10) erhalten wird.

12. Neuronaler Netzwerkverbund nach Anspruch 11, wobei das Gewichtungstool (80) ein neuronales Netzwerk (24) umfasst.

13. System (20,60) zum Regeln einer Energieträgerverteilung oder Brennstoffverteilung in einem Querverbundsystem (10) mit einem neuronalen Netzwerk (24) nach Anspruch 9 oder 10, oder mit einem neuronalen Netzwerkverbund (72) nach Anspruch 11 oder 12, wobei das Querverbundsystem (10) mit einem thermischen Netz (12) gekoppelt ist und wobei das System (20,60) umfasst:
eine Eingabeeinrichtung (22,62,64), welche so konfiguriert ist, dass sie energetische Daten (16) des Querverbundsystems (10) und thermischen Daten (18) des thermischen Netzes (12) erfasst und Eingabedaten aus den thermische Daten (18) des thermischen Netzes (12) und den energetischen Daten (16) des Querverbundsystems (10) erstellt; und
ein Regelungselement (68), welches so konfiguriert ist, dass auf Grundlage der Prognose des neuronalen Netzwerks (24) oder des neuronalen Netzwerkverbunds (72) eine Regelungsempfehlung einer Steuergröße des Querverbundsystems (10) erstellt wird.

14. System nach Anspruch 13, wobei das Querverbundsystem (10) umfasst:
mindestens zwei Elemente aus der Gruppe von einem Kraftwerk (28), einem Heizkraftwerk (30) und einem Heizwerk (32),
wobei das Querverbundsystem (10) mit einem elektrischen Netz (40) gekoppelt ist.

15. Computerprogramm, welches maschinenlesbare Instruktionen umfasst, die ein Verfahren mit den folgenden Schritten implementieren:
Erfassen energetischer Daten (16) eines Querverbundsystems (10);
Erfassen thermischer Daten (18) eines thermischen Netzes (12) in thermischer Verbindung mit dem Querverbundsystem (10);
Erstellen von Eingabedaten für ein neuronales Netzwerk (24) aus den erfassten energetischen Daten (16) und thermischen Daten (18);
Erhalten von Anregungspotentialen einer Ausgabeebene (71c) des neuronalen Netzwerks (24);
Prognostizieren eines Kennwertes eines Elements (14,28,30,32,34,36,38,42) des Querverbundsystems (10) auf Grundlage der Anregungspotentiale des neuronalen Netzwerks (24); und
Erstellen einer Regelungsempfehlung für das Element (14,28,30,32,34,36,38,42) des Querverbundsystems (10) auf Grundlage des prognostizierten Kennwerts.
